# EUROPEAN PATENT APPLICATION

(11) **EP 4 782 263 A1**
(43) Date of publication of application: **29.07.2026**
(21) Application number: 24867092.9
(22) Date of filing: 25.07.2024
(51) Int. Cl.: B60L 53/80

(54) **HYDROGEN SUPPLY SYSTEM FOR HYDROGEN-POWERED TRUCK**

(30) Priority: 20.09.2023 CN 202311222803
(71) Applicant: Shanghai Jiening New Energy Technology Development, Shanghai 200444 (CN)
(72) Inventor: DONG, Jiayi, Shanghai 200444 (CN); LI, Zongtao, Shanghai 200444 (CN); YAO, Haixiang, Shanghai 200444 (CN); WANG, Zhihui, Shanghai 200444 (CN); FAN, Yonggang, Shanghai 200444 (CN)
(74) Representative: Murgitroyd & Company
(86) International application number: PCT/CN2024/107607
(87) International publication number: WO 2025/060675

(57) **Abstract**

Disclosed in the present application is a hydrogen supply system for a hydrogen-powered truck. The hydrogen supply system comprises a hydrogen-module carrier vehicle and a hoisting apparatus. The hydrogen-module carrier vehicle is used for loading a hydrogen module for replacement and a consumed hydrogen module. The hoisting apparatus comprises main sliding rails, a gantry, an overhead frame and a hoisting locking device, wherein the main sliding rails are configured to be fixedly mounted on the ground; the gantry is slidably erected on the two main sliding rails parallel to each other, and the gantry is provided with a longitudinal driving mechanism, the longitudinal driving mechanism being used for driving the gantry to move in a longitudinal direction; the overhead frame is slidably mounted at the top of the gantry, and the overhead frame is provided with a transverse driving mechanism, the transverse driving mechanism being used for driving the overhead frame to move in a transverse direction; and the hoisting locking device is mounted on the overhead frame. When the hydrogen-module carrier vehicle and a hydrogen-powered truck are parked in a hydrogen-module replacement operation area, both the hydrogen-module carrier vehicle and the hydrogen-powered truck are parked with the heads thereof facing in the longitudinal direction. In the present application, the hydrogen-powered truck is replenished with hydrogen energy by means of direct replacement of a hydrogen module, which is conducive to guaranteeing safe operations.

## Description

### TECHNICAL FIELD

The present application relates to the field of vehicle energy supply, and in particular relates to a hydrogen supply system for a hydrogen-powered truck.

### BACKGROUND

Hydrogen-powered vehicles are automobiles that use hydrogen as their energy source. In hydrogen-powered vehicles, the chemical energy from hydrogen reactions is converted into mechanical energy to propel the vehicles. Hydrogen-powered vehicles offer advantages such as low greenhouse gas emissions, short refueling time, and long driving range. Consequently, hydrogen-powered vehicles are particularly suitable for medium-to-long-distance or heavy-duty transportation.

As an emerging type of heavy-duty transport vehicles, hydrogen-powered trucks are more eco-friendly than diesel-powered trucks. Compared to pure electric tractor trucks, hydrogen-powered trucks have the advantages of short refueling time and large load capacity.

In the prior art, hydrogen-powered trucks are generally refueled through on-site hydrogen refueling. A small amount of hydrogen leakage is inevitable during hydrogen refueling, which poses a potential safety hazard in places such as mines.

### SUMMARY

To mitigate safety risks during the hydrogen refueling process of hydrogen-powered trucks, the present application provides a hydrogen supply system for a hydrogen-powered truck.

The hydrogen supply system for the hydrogen-powered truck provided in the present application adopts the following technical solutions:

The hydrogen supply system for the hydrogen-powered truck includes a hydrogen module carrier vehicle and a hoisting apparatus, where the hydrogen module carrier vehicle is configured to load replacement hydrogen modules and spent hydrogen modules; the hoisting apparatus includes main slide rails, a gantry frame, a top frame, and a hoisting and locking device; the main slide rails are fixedly arranged on a ground; the gantry frame is slidably arranged astride two parallel main slide rails; a sliding direction of the gantry frame is defined as a longitudinal direction; the gantry frame is provided with a longitudinal drive mechanism, and the longitudinal drive mechanism is configured to drive the gantry frame to move along the longitudinal direction; the top frame is slidably arranged on a top of the gantry frame; a sliding direction of the top frame is defined as a horizontal direction; the top frame is provided with a horizontal drive mechanism, and the horizontal drive mechanism is configured to drive the top frame to move along the horizontal direction; the hoisting and locking device is arranged on the top frame; the hoisting and locking device is configured to grasp and hoist a hydrogen module; a region between the two main slide rails serves as a hydrogen module replacement region; and when the hydrogen module carrier vehicle and the hydrogen-powered truck are parked in the hydrogen module replacement region, front ends of both the hydrogen module carrier vehicle and the hydrogen-powered truck are oriented in the longitudinal direction.

In the above technical solution, when the hydrogen module carrier vehicle loaded with replacement hydrogen modules is parked in the hydrogen module replacement region, the hydrogen module replacement region is located in an operating region of the hoisting apparatus, the gantry frame of the hoisting apparatus is movable in the longitudinal direction, and the top frame of the hoisting apparatus is movable along the horizontal direction. When the hydrogen energy of the hydrogen-powered truck needs to be replenished, the hydrogen-powered truck drives into the hydrogen module replacement region and keeps the same orientation as the hydrogen module carrier vehicle. Then, the hoisting and locking device of the hoisting apparatus moves to be above the hydrogen-powered truck, and a spent hydrogen module is hoisted and removed by the hoisting and locking device. The hoisting and locking device then moves to be above the hydrogen module carrier vehicle, and a replacement hydrogen module is hoisted by the hoisting and locking device onto the hydrogen-powered truck for assembly. During the above process, the hydrogen-powered truck is replenished with hydrogen energy by directly replacing a hydrogen module, which is not prone to hydrogen leakage and is conducive to ensuring safe operation. Moreover, for occasions where hydrogen refueling stations cannot be built nearby for safety reasons, replenishing hydrogen energy by replacing a hydrogen module can reduce the travel distance of the hydrogen-powered truck for refueling, which contributes to time saving and efficiency improvement.

Optionally, the main slide rails each include a longitudinal steel rail and a support truss; the support truss includes a steel beam and a plurality of support legs; the steel beam is arranged along the longitudinal direction; the longitudinal steel rail is longitudinally fixed to a top of the steel beam; the plurality of support legs are spaced along the longitudinal direction; the plurality of support legs each include a vertical support rod and an inclined support rod; the vertical support rod is arranged directly below the steel beam; an upper end of the inclined support rod is connected to an upper end of the vertical support rod; and a lower end of the inclined support rod is horizontally offset from the vertical support rod.

In the above technical solution, the longitudinal steel rail is arranged on the steel beam of the support truss, such that a sufficient height difference is maintained between the longitudinal steel rail and the ground, which is beneficial for reducing dust accumulation on a surface of the longitudinal steel rail. The vertical support rod, the inclined support rod, and the ground together form a triangular structure with high stability, which facilitates the structural stability of the support legs.

Optionally, two ends of the steel beam are each provided with a limit block, and the limit block is configured to limit a longitudinal travel of the gantry frame; a distribution range of the plurality of support legs along the longitudinal direction is located between two end faces of the steel beam; a vertical support rod of a support leg that is close to an end of the steel beam is provided with a diagonal brace; and an end of the diagonal brace is connected to the vertical support rod, and another end of the diagonal brace is connected to the end of the steel beam.

With the above technical solution, a travel of the gantry frame can be limited by the limit block. When the gantry frame collides with the limit block, an end of the support truss is subjected to a relatively large impact force. The arrangement of the diagonal brace can improve the structural stability of the end of the support truss, making the support truss less likely to deform due to the collision of the gantry frame.

Optionally, a body of the hydrogen module carrier vehicle is provided with a plurality of quick-change fixturing mechanisms; the plurality of quick-change fixturing mechanisms are configured to position a replacement hydrogen module or a spent hydrogen module; and the plurality of quick-change fixturing mechanisms are equally spaced along a length direction of the body of the hydrogen module carrier vehicle.

In the above technical solution, hydrogen modules are arranged in a loading region of the body of the hydrogen module carrier vehicle through the quick-change fixturing mechanisms, such that positions of the hydrogen modules remain stable. When the hydrogen module carrier vehicle transports the hydrogen modules, the hydrogen modules are not easily damaged due to vehicle jolting.

Optionally, a loading region of the body of the hydrogen module carrier vehicle is divided into a plurality of unit loading zones, and each of the plurality of unit loading zones corresponds to one of the plurality of quick-change fixturing mechanisms; a number of the unit loading zones is one more than a number of the hydrogen modules; the hydrogen module carrier vehicle is provided with a hydrogen module substitute; and the hydrogen module substitute has an identical outer contour to each hydrogen module.

In the above technical solution, the plurality of unit loading zones on the hydrogen module carrier vehicle are arranged in one-to-one correspondence with the plurality of quick-change fixturing mechanisms, and the number of the unit loading zones is one more than the number of the hydrogen modules. When a spent hydrogen module of the hydrogen-powered truck needs to be changed, the spent hydrogen module can be directly hoisted by the hoisting apparatus to a vacant unit loading zone, and then a replacement hydrogen module is hoisted by the hoisting apparatus onto the hydrogen-powered truck. During the above process, the hoisting apparatus does not need to place the spent hydrogen module outside the hydrogen-powered truck and the hydrogen module carrier vehicle, and avoids an additional operation of hoisting the spent hydrogen module onto the hydrogen module carrier vehicle, which improves the overall working efficiency of the hydrogen supply system for the hydrogen-powered truck.

Optionally, a long side of the hydrogen module carrier vehicle is provided with a hydrogen module placement platform; the hydrogen module placement platform includes a platform plate, a limit plate, a limit bolt, and a hinge base; the platform plate is hinged to the body of the hydrogen module carrier vehicle; the hinge base is hinged to the body of the hydrogen module carrier vehicle; the hinge base is lower than a side of the limit plate that is connected to the hydrogen module carrier vehicle; the limit plate is provided with a first through hole; the platform plate is provided with a second through hole; the hinge base is provided with a threaded hole adapted to the limit bolt; the limit bolt passes through the first through hole and the second through hole successively and is then threadedly connected to the threaded hole; the platform plate is configured to support a hydrogen module; and the limit plate is configured to prevent the hydrogen module from leaving the platform plate.

In the above technical solution, the limit bolt passes through the limit plate and the platform plate successively and then is connected to the hinge base, such that the limit bolt, the limit plate, the platform plate, and a side wall of the hydrogen module carrier vehicle together form two triangular regions to maintain a stable structure of the hydrogen module placement platform and enable the arrangement of a hydrogen module on the hydrogen module placement platform. In this way, during hydrogen module replacement, a spent hydrogen module can be hoisted onto the hydrogen module placement platform instead of being placed on the ground, which minimizes contamination and external impact damage to the hydrogen module. Moreover, the first spent hydrogen module that has been replaced is placed on the hydrogen module placement platform, such that the first spent hydrogen module does not occupy space on the hydrogen module carrier vehicle. After the first replacement hydrogen module is taken away from the hydrogen module carrier vehicle, there is vacant space available on the hydrogen module carrier vehicle. Consequently, subsequent spent hydrogen modules can be directly placed on the hydrogen module carrier vehicle, which is convenient. The limit bolt is threadedly connected to the hinge base. During transportation of the hydrogen module carrier vehicle, the limit bolt can be withdrawn from the first through hole and the second through hole, such that the platform plate and the limit plate can unfold and hang down, thereby reducing the space occupied by the hydrogen module placement platform.

Optionally, the hydrogen supply system further includes auxiliary positioning devices, where the auxiliary positioning devices each include an infrared emitter and an infrared receiver; the infrared emitter is configured to be arranged on a side wall of a hydrogen module; the infrared receiver is configured to be arranged on a long side of a body of the hydrogen-powered truck or the body of the hydrogen module carrier vehicle; and when the hydrogen module corresponding to the auxiliary positioning devices is arranged in place, the infrared emitter is vertically aligned with the infrared receiver.

With this technical solution, before the hoisting apparatus delivers a hydrogen module onto the hydrogen-powered truck or the hydrogen module carrier vehicle, the infrared emitter is arranged on a side wall of the hydrogen module and the infrared receiver is arranged on the hydrogen module carrier vehicle. Then, the hoisting apparatus moves the hydrogen module. When the hydrogen module moves, a signal reception state of the infrared receiver relative to the infrared emitter can be used to assist in determining the horizontal alignment of the hydrogen module, which can improve the arrangement efficiency of the hydrogen module.

Optionally, a light-emitting side of the infrared emitter has a point-like structure; a receiving side of the infrared receiver has an elongated structure; a long edge of the receiving side of the infrared receiver is parallel to a side wall of the corresponding hydrogen module; the auxiliary positioning devices include a first auxiliary positioning device and a second auxiliary positioning device; and the first auxiliary positioning device and the second auxiliary positioning device are respectively arranged on two adjacent sides of the corresponding hydrogen module.

With the above technical solution, the first auxiliary positioning device and the second auxiliary positioning device can be used to determine the alignment of the hydrogen module in two mutually perpendicular directions within a horizontal plane, which further enhances the accuracy of positioning of the hydrogen module. Accordingly, the arrangement efficiency of the hydrogen module can be further improved.

Optionally, the infrared emitter is provided with a first magnetic base; the infrared receiver is provided with a second magnetic base; during assembly, the first magnetic base is attached to a side wall of the corresponding hydrogen module through magnetic attraction; and during assembly, the second magnetic base is attached to the body of the hydrogen-powered truck or the body of the hydrogen module carrier vehicle through magnetic attraction.

With the above technical solution, the infrared emitter is arranged on the side wall of the hydrogen module through the first magnetic base, and the infrared receiver is arranged on the body of the hydrogen-powered truck or the hydrogen module carrier vehicle through the second magnetic base, which is convenient.

Optionally, the hoisting and locking device includes a hoisting frame and a lifting drive mechanism; the lifting drive mechanism is arranged on the top frame; the hoisting frame is arranged below the top frame through the lifting drive mechanism; the hoisting frame is provided with a plurality of positioning and locking mechanisms; the plurality of positioning and locking mechanisms each include a clamping claw and a telescopic drive member; the clamping claw is arranged on the hoisting frame through the telescopic drive member; and the clamping claw is configured to hook a hoisting structure of each hydrogen module.

With the above technical solution, when the hoisting and locking device is in use, the telescopic drive member drives an L-shaped member to move, such that the L-shaped member hooks the hoisting structure of the hydrogen module. In this way, the hoisting and locking device can lift the hydrogen module upward.

In conclusion, the present application includes at least one of the following advantageous technical effects:
1. The hydrogen supply system enables hydrogen energy replenishment for a hydrogen-powered truck by directly replacing a hydrogen module, which is not prone to hydrogen leakage and is conducive to ensuring safe operation. For occasions where hydrogen refueling stations cannot be built nearby for safety reasons, replenishing hydrogen energy by replacing a hydrogen module can reduce the travel distance of the hydrogen-powered truck for refueling, which contributes to time saving and efficiency improvement.
2. The first spent hydrogen module that has been replaced is placed on the hydrogen module placement platform, such that the first spent hydrogen module does not occupy space on the hydrogen module carrier vehicle. After the first replacement hydrogen module is taken away from the hydrogen module carrier vehicle, there is vacant space available on the hydrogen module carrier vehicle. Consequently, subsequent spent hydrogen modules can be directly placed on the hydrogen module carrier vehicle, which is convenient.

### BRIEF DESCRIPTION OF THE DRAWINGS

FIG. 1 is a schematic view of an overall structure of Embodiment 1;
FIG. 2 is a schematic structural view of a hoisting apparatus in Embodiment 1;
FIG. 3 is a schematic structural view of a gantry frame in Embodiment 1;
FIG. 4 is a schematic view of a lifting drive mechanism in Embodiment 1;
FIG. 5 is a schematic view illustrating a connection state between a quick-change fixturing mechanism and a hydrogen-module main frame in Embodiment 1;
FIG. 6 is a schematic structural view of a quick-change fixturing mechanism in Embodiment 1;
FIG. 7 is a schematic structural view of a hydrogen module placement platform in Embodiment 2;
FIG. 8 is a schematic view illustrating a connection state of a bolt in Embodiment 2; and
FIG. 9 is a schematic view of an auxiliary positioning device in Embodiment 2.

Reference numerals:
1. hydrogen module carrier vehicle; 2. hoisting apparatus; 21. main slide rail; 211. longitudinal steel rail; 212. support truss; 2120. steel beam; 2121. support leg; 2122. vertical support rod; 2123. inclined support rod; 2124. connection plate; 2125. limit block; 2126. diagonal brace; 22. gantry frame; 23. top frame; 231. horizontal steel rail; 24. hoisting and locking device; 241. hoisting frame; 243. lifting drive mechanism; 2430. dual-drum winch; 2431. drum; 2432. steel cable; 244. fixed pulley; 245. movable pulley; 246. positioning and locking mechanism; 2461. clamping claw; 2462. telescopic drive member; 247. guide post; 2471. inclined guide surface; 25. longitudinal drive mechanism; 251. first motor; 252. first driving roller; 253. first driven roller; 26. horizontal drive mechanism; 261. second motor; 262. second driving roller; 263. second driven roller; 3. hydrogen module; 31. hydrogen-module main frame; 4. quick-change fixturing mechanism; 41. connection seat; 42. latching mechanism; 421. mounting column; 4211. guide surface; 422. latching assembly; 4221. latching block; 4222. telescopic cylinder; 5. hydrogen module placement platform; 51. platform plate; 511. first through hole; 52. limit plate; 521. second through hole; 53. limit bolt; 54. hinge base; 541. threaded hole; 55. wedge washer; 6. auxiliary positioning device; 61. infrared emitter; 62. infrared receiver; 63. first magnetic base; 64. second magnetic base; and 7. hydrogen-powered truck.

### DETAILED DESCRIPTION OF THE EMBODIMENTS

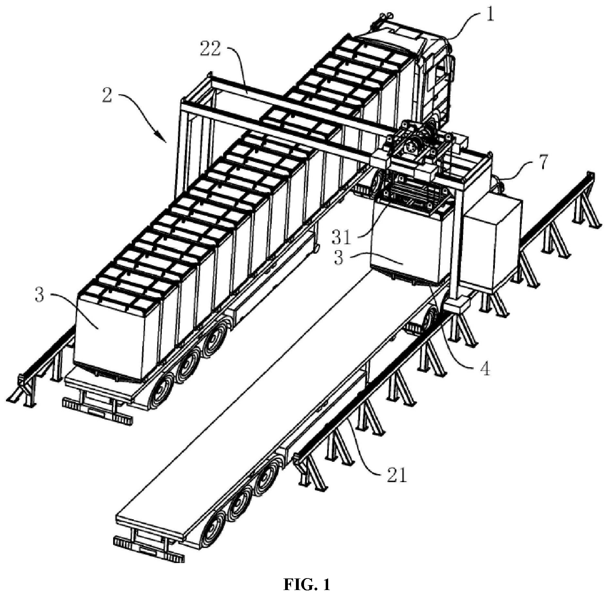

The present application will be further described in detail below with reference to FIG. 1 to FIG. 9.

### Embodiment 1

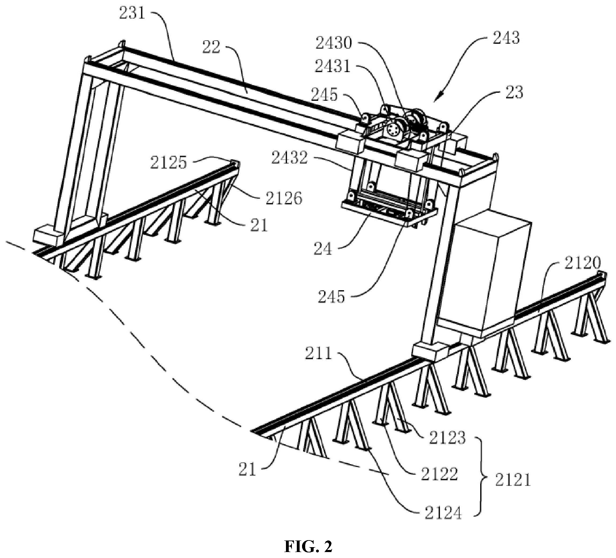

This embodiment of the present application discloses a hydrogen supply system for a hydrogen-powered truck. As shown in FIG. 1 and FIG. 2, the hydrogen supply system for the hydrogen-powered truck includes a hydrogen module carrier vehicle 1 and a hoisting apparatus 2. The hydrogen module carrier vehicle 1 is configured to load hydrogen modules 3. The hydrogen modules 3 each include a main frame configured to arrange a hydrogen storage tank. The hoisting apparatus 2 includes main slide rails 21, a gantry frame 22, a top frame 23, and a hoisting and locking device 24. The main slide rails 21 are arranged on a ground. Two main slide rails 21 are provided and are parallel to each other. The gantry frame 22 is slidably arranged between the two main slide rails 21. A region between the two main slide rails 21 serves as a hydrogen module replacement region. A length direction of the main slide rails 21 is defined as a longitudinal direction. The gantry frame 22 is provided with a longitudinal drive mechanism 25, and the longitudinal drive mechanism 25 is configured to drive the gantry frame 22 to move along the longitudinal direction. The top frame 23 is slidably arranged on a top of the gantry frame 22. The top frame 23 is provided with a horizontal drive mechanism 26, and the horizontal drive mechanism 26 is configured to drive the top frame 23 to move along a horizontal direction. The hoisting and locking device 24 is arranged on the top frame 23. The hoisting and locking device 24 is configured to grasp and hoist the hydrogen modules 3.

When the hydrogen-powered truck 7 requires hydrogen refueling, both the hydrogen module carrier vehicle 1 and the hydrogen-powered truck 7 are parked in the hydrogen module replacement region, and front ends of both the hydrogen module carrier vehicle 1 and the hydrogen-powered truck 7 are oriented in the longitudinal direction. A spent hydrogen module 3 on the hydrogen-powered truck 7 is first hoisted and removed by the hoisting apparatus 2. Then, the hoisting and locking device 24 of the hoisting apparatus 2 is moved above the hydrogen module carrier vehicle 1, and a replacement hydrogen module 3 on the hydrogen module carrier vehicle 1 is hoisted by the hoisting and locking device onto the hydrogen-powered truck 7 for assembly. The spent hydrogen module 3 may be hoisted by the hoisting apparatus 2 to a vacant position on the hydrogen module carrier vehicle 1. After all replacement hydrogen modules 3 loaded on the hydrogen module carrier vehicle 1 are replaced with spent hydrogen modules 3, the spent hydrogen modules 3 loaded on the hydrogen module carrier vehicle 1 are collectively refueled with hydrogen.

As shown in FIG. 2, the main slide rails 21 each include a longitudinal steel rail 211 and a support truss 212. The support truss 212 includes a steel beam 2120 and a plurality of support legs 2121. The steel beam 2120 is arranged along the longitudinal direction. The longitudinal steel rail 211 is longitudinally fixed to a top of the steel beam 2120. The plurality of support legs 2121 are equally spaced along the longitudinal direction. The plurality of support legs 2121 each include a vertical support rod 2122 and an inclined support rod 2123. The vertical support rod 2122 is arranged directly below the steel beam 2120. The inclined support rod 2123 is located on a side of the vertical support rod 2122 that is away from the hydrogen module replacement region. An upper end of the inclined support rod 2123 is connected to an upper end of the vertical support rod 2122. A lower end of the inclined support rod 2123 is horizontally offset from the vertical support rod 2122. A lower end of the vertical support rod 2122 and the lower end of the inclined support rod 2123 are each provided with a connection plate 2124. When the support truss 212 is arranged, the connection plate 2124 may be fixed to a concrete ground through expansion bolts, or the connection plate 2124 may be welded to a steel structure pre-embedded in the concrete ground.

As shown in FIG. 2, two ends of the steel beam 2120 are each provided with a limit block 2125, and the limit block 2125 is configured to limit a longitudinal travel of the gantry frame 22. A distribution range of the plurality of support legs 2121 along the longitudinal direction is located between two end faces of the steel beam 2120. Support legs 2121 respectively close to two ends of the steel beam 2120 are each provided with a diagonal brace 2126. An end of the diagonal brace 2126 is connected to a vertical support rod 2122 of a corresponding support leg 2121. Another end of the diagonal brace 2126 is connected to a corresponding end of the steel beam 2120.

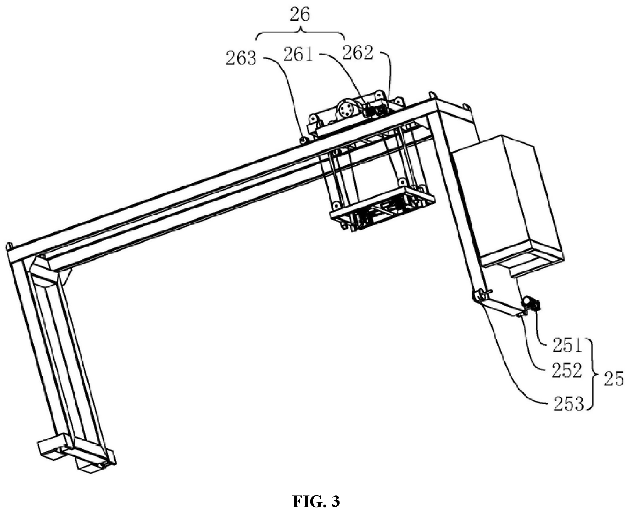

As shown in FIG. 3, two longitudinal drive mechanisms 25 are provided, and the two longitudinal drive mechanisms 25 correspond to two longitudinal steel rails 211, respectively. Each longitudinal drive mechanism 25 includes a first motor 251, a first driving roller 252, and a first driven roller 253. The first motor 251, the first driving roller 252, and the first driven roller 253 are all arranged on the gantry frame 22. The first driving roller 252 and first driven roller 253 are in rolling engagement with the respective longitudinal steel rails 211. The first motor 251 is configured to drive the first driving roller 252 to travel along the longitudinal steel rail 211.

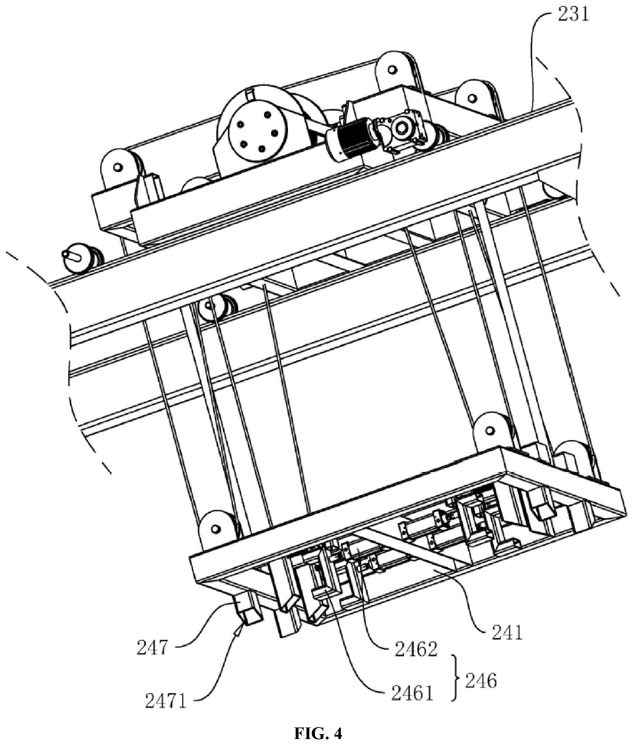

As shown in FIG. 3 and FIG. 4, the top of the gantry frame 22 is provided with two horizontal steel rails 231, two horizontal drive mechanisms 26 are provided, and the two horizontal drive mechanisms correspond to the two horizontal steel rails 231, respectively. Each horizontal drive mechanism 26 includes a second motor 261, a second driving roller 262, and a second driven roller 263. The second motor 261, the second driving roller 262, and the second driven roller 263 are all arranged on the top frame 23. The second driving roller 262 and the second driven roller 263 are in rolling engagement with the respective horizontal steel rails 231. The second motor 261 is configured to drive the second driving roller 262 to travel along the horizontal steel rail 231.

As shown in FIG. 4, the hoisting and locking device 24 includes a hoisting frame 241 and a lifting drive mechanism 243. The lifting drive mechanism 243 is arranged on the top frame 23. The lifting drive mechanism 243 includes a dual-drum winch 2430, four fixed pulleys 244, and four movable pulleys 245. The dual-drum winch 2430 is arranged in a middle region of the top frame 23. The dual-drum winch 2430 has two drums 2431. Each drum 2431 is provided with two steel cables 2432. The four fixed pulleys 244 are respectively arranged at four corners of the top frame 23. The four fixed pulleys 244 correspond to four steel cables 2432, respectively. The four movable pulleys 245 are respectively arranged at four corners of the hoisting frame 241. The four movable pulleys 245 correspond to the four steel cables 2432, respectively. The four steel cables 2432 of the dual-drum winch are routed around the respective fixed pulleys 244 and movable pulleys 245 successively, and then connected to the hoisting frame 241. The hoisting frame 241 is hoisted by the lifting drive mechanism 243 to be below the top frame 23.

The hoisting frame 241 is provided with a plurality of groups of positioning and locking mechanisms 246 and a plurality of groups of guide posts 247. Each group of positioning and locking mechanisms 246 includes two positioning and locking mechanisms. Two positioning and locking mechanisms 246 in a same group are arranged oppositely. Each positioning and locking mechanism 246 includes a clamping claw 2461 and a telescopic drive member 2462. The telescopic drive member 2462 is an air cylinder. The clamping claw 2461 is arranged on the hoisting frame 241 through the telescopic drive member 2462. The clamping claw 2461 is configured to hook a hoisting structure of each hydrogen module 3. When both of the two positioning and locking mechanisms 246 arranged oppositely hook a top of a hydrogen module 3, a position of the hydrogen module 3 is locked. Each group of guide posts 247 includes two guide posts. Two guide posts 247 in a same group are arranged oppositely. A lower end face of each guide post 247 is provided with an inclined guide surface 2471. Inclined guide surfaces 2471 of two guide posts 247 in a same group are arranged toward each other or away from each other. During a downward movement of the hoisting frame 241, the inclined guide surfaces 2471 can guide a main frame of a hydrogen module 3, such that the hydrogen module is vertically aligned with the hoisting frame 241.

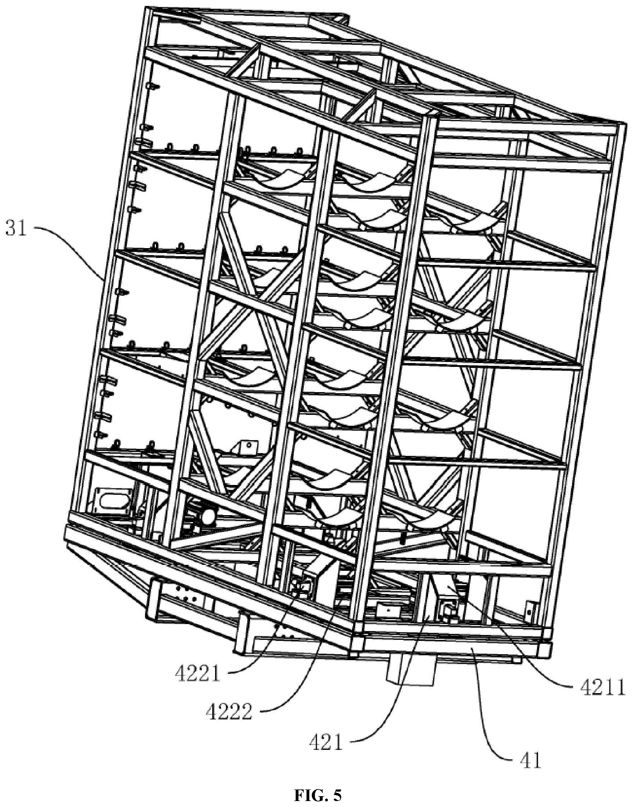

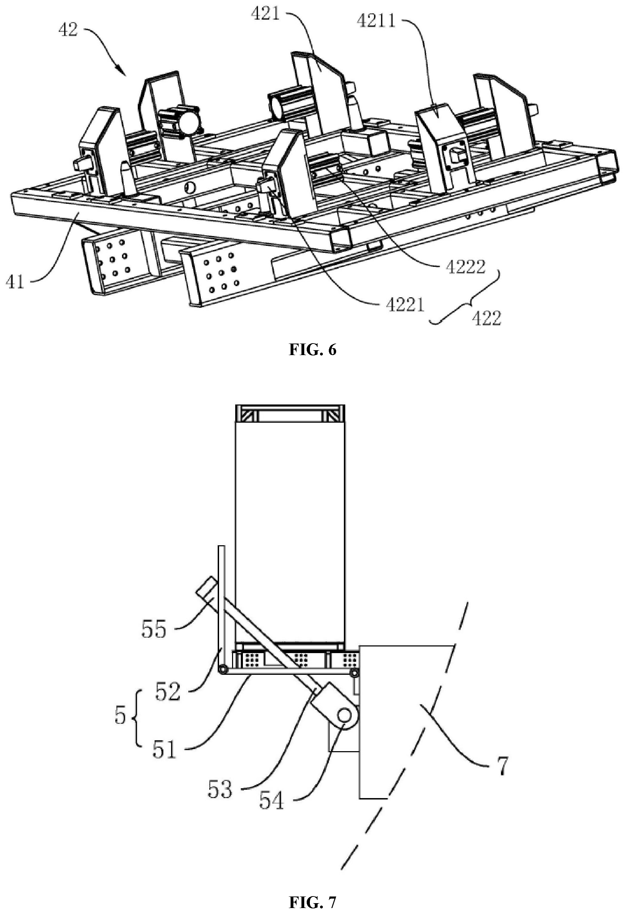

As shown in FIG. 5 and FIG. 6, a body of the hydrogen module carrier vehicle 1 is provided with a plurality of quick-change fixturing mechanisms 4. The plurality of quick-change fixturing mechanisms 4 are configured to position a replacement hydrogen module 3 or a spent hydrogen module 3. The plurality of quick-change fixturing mechanisms 4 are equally spaced along a length direction of the body of the hydrogen module carrier vehicle 1. Each quick-change fixturing mechanism 4 includes a connection seat 41 and eight latching mechanisms 42. The connection seat 41 is a welded frame structure. The connection seat 41 is configured to be connected to a body of the hydrogen-powered truck 7. The eight latching mechanisms 42 are arranged on the connection seat 41. The eight latching mechanisms 42 are arranged around a center of the connection base 41. Each latching mechanism 42 includes a mounting column 421 and a latching assembly 422. The latching assembly 422 includes a latching block 4221 and a telescopic cylinder 4222. The telescopic cylinder 4222 is configured to drive the latching block 4221 to telescopically move in a direction toward or away from the center of the connection base 41. The mounting column 421 is provided with a guide surface 4211. The guide surface 4211 is oriented to incline away from the center of the connection base 41.

During a process of hoisting a hydrogen module 3 onto the hydrogen module carrier vehicle 1, as the hydrogen module 3 moves downward, the guide surface 4211 of the mounting column 421 abuts against a frame bar of a main frame of the hydrogen module, such that the main frame is vertically aligned with the quick-change fixturing mechanism 4. In this case, the latching block 4221 is in a retracted state to avoid the main frame of the hydrogen module 3. After the hydrogen module 3 is lowered into place, the telescopic cylinder 4222 drives the latching block 4221 to move forward, such that the latching block 4221 latches onto a frame bar of a bottom of the main frame to restrict a vertical position of the hydrogen module 3. As a result, the hydrogen module is less susceptible to vibration of the hydrogen module carrier vehicle 1 during travel.

The hoisting apparatus 2 is provided with an air pump. The air pump is configured to supply an air source to air cylinders of the hoisting and locking device 24 and the quick-change fixturing mechanism 4.

A loading region of the body of the hydrogen module carrier vehicle 1 is divided into a plurality of unit loading zones. A number of the unit loading zones is the same as a number of the hydrogen modules 3. Each unit loading zone corresponds to a quick-change fixturing mechanism 4.

The implementation principle of the hydrogen supply system for the hydrogen-powered truck according to this embodiment of the present application is as follows: The hydrogen module carrier vehicle 1 loaded with replacement hydrogen modules 3 is parked in the hydrogen module replacement region. When the hydrogen-powered truck 7 requires hydrogen energy replenishment, the hydrogen-powered truck 7 drives into the hydrogen module replacement region and keeps the same orientation as the hydrogen module carrier vehicle 1. Then, the hoisting and locking device 24 of the hoisting apparatus 2 moves to be above the hydrogen-powered truck 7, and a spent hydrogen module 3 is hoisted and removed by the hoisting and locking device 24. The hoisting and locking device 24 then moves to be above the hydrogen module carrier vehicle 1, and a replacement hydrogen module 3 is hoisted by the hoisting and locking device onto the hydrogen-powered truck 7 for assembly. After all replacement hydrogen modules 3 on the hydrogen module carrier vehicle 1 are replaced with spent hydrogen modules 3, the hydrogen module carrier vehicle 1 transports all spent hydrogen modules 3 to a hydrogen refueling station for hydrogen refueling.

The hydrogen-powered truck 7 is replenished with hydrogen energy by directly replacing a hydrogen module 3, which is not prone to hydrogen leakage and is conducive to ensuring safe operation. Moreover, for occasions where hydrogen refueling stations cannot be built nearby for safety reasons, replenishing hydrogen energy by replacing a hydrogen module 3 can reduce the travel distance of the hydrogen-powered truck 7 for refueling, which contributes to time saving and efficiency improvement.

### Embodiment 2

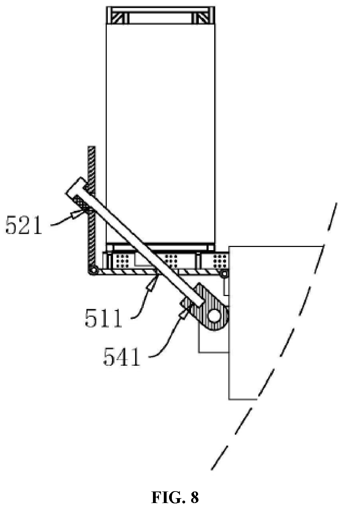

As shown in FIG. 7 and FIG. 8, this embodiment is different from Embodiment 1 as follows: A long side of the hydrogen module carrier vehicle 1 is provided with a hydrogen module 3 placement platform. The hydrogen module 3 placement platform includes a platform plate 51, a limit plate 52, a limit bolt 53, and a hinge base 54. The platform plate 51 is hinged to the body of the hydrogen module carrier vehicle 1. The hinge base 54 is hinged to the body of the hydrogen module carrier vehicle 1. The hinge base 54 is lower than a side of the limit plate 52 that is connected to the hydrogen module carrier vehicle 1. The limit plate 52 is provided with a first through hole 511. The platform plate 51 is provided with a second through hole 521. The hinge base 54 is provided with a threaded hole 541 adapted to the limit bolt 53. The limit bolt 53 passes through the first through hole 511 and the second through hole 521 successively and is then threadedly connected to the threaded hole 541. The platform plate 51 is configured to support a hydrogen module 3. The limit plate 52 is configured to prevent the hydrogen module 3 from leaving the platform plate 51. Two limit bolts 53 are provided. The two limit bolts 53 are respectively located on two opposite sides of the platform plate 51. A region of the platform plate 51 between the two limit bolts 53 serves as a hydrogen module 3 placement region. The limit bolts 53 can limit a position of the hydrogen module 3 on the platform plate 51.

When a spent hydrogen module 3 needs to be replaced, the spent hydrogen module 3 may first be hoisted onto the hydrogen module 3 placement platform. Then, a replacement hydrogen module is taken from the hydrogen module carrier vehicle 1 for replacement, such that a unit loading zone is vacated. As a result, when a subsequent hydrogen-powered truck 7 requires hydrogen module replacement, the hoisting apparatus 2 can directly hoist a spent hydrogen module 3 onto the vacated unit loading zone on the hydrogen module carrier vehicle 1. After all replacement hydrogen modules 3 on the hydrogen module carrier vehicle 1 have been replaced with spent hydrogen modules 3, the spent hydrogen module 3 on the hydrogen module placement platform is hoisted to a vacated unit loading zone on the hydrogen module carrier vehicle 1. During transportation of the hydrogen module carrier vehicle 1, the limit bolts 53 can be removed to make the platform plate 51 and the limit plate 52 unfold, thereby reducing the space occupied by the hydrogen module placement platform.

Each limit bolt 53 is sleeved with a wedge washer 55. The wedge washer 55 is located between a bolt head of the limit bolt 53 and the limit plate 52. The wedge washer 55 occupies a gap between the bolt head of the limit bolt 53 and the limit plate 52 to guarantee stable connection between the limit bolt 53 and the limit plate 52.

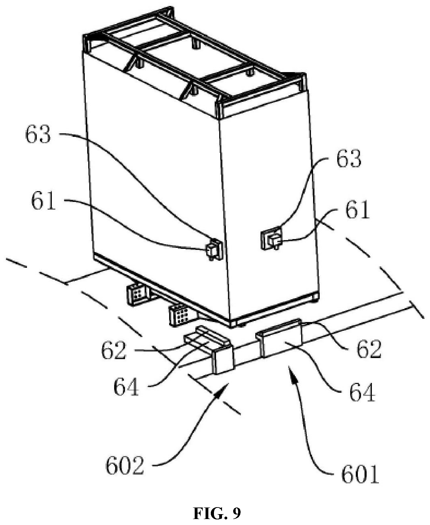

As shown in FIG. 9, the hydrogen supply system for the hydrogen-powered truck in this embodiment further includes auxiliary positioning devices 6. Each auxiliary positioning device 6 includes an infrared emitter 61 and an infrared receiver 62. The infrared emitter 61 is configured to be arranged on a side wall of a hydrogen module 3. The infrared receiver 62 is configured to be arranged on a long side of a body of the hydrogen-powered truck 7 or the body of the hydrogen module carrier vehicle. A light-emitting side of the infrared emitter 61 has a point-like structure. A receiving side of the infrared receiver 62 has an elongated structure. A long edge of the receiving side of the infrared receiver 62 is parallel to a side wall of the corresponding hydrogen module 3. The infrared emitter 61 is provided with a first magnetic base 63. During assembly, the infrared emitter 61 is attached to a side wall of the corresponding hydrogen module 3 through magnetic attraction. The infrared receiver 62 is provided with a second magnetic base 64. During assembly, the infrared receiver 62 is attached to the body of the hydrogen-powered truck 7 or the body of the hydrogen module carrier vehicle 1 through magnetic attraction.

The auxiliary positioning devices 6 are divided into a first auxiliary positioning device 6 and a second auxiliary positioning device 6 according to different acting positions on the corresponding hydrogen module 3. The first auxiliary positioning device 6 and the second auxiliary positioning device 6 are respectively arranged on two adjacent sides of the corresponding hydrogen module 3.

Before the hoisting apparatus 2 delivers a hydrogen module 3 onto the hydrogen-powered truck 7 or the hydrogen module carrier vehicle 1, the infrared emitter 61 is arranged on a side wall of the hydrogen module 3 and the infrared receiver 62 is arranged on the hydrogen module carrier vehicle 1. Then, the hoisting apparatus 2 moves the hydrogen module 3. When the hydrogen module 3 moves, the first auxiliary positioning device 6 and the second auxiliary positioning device 6 can be used to determine the alignment of the hydrogen module 3 in two mutually perpendicular directions within a horizontal plane. When the hydrogen module 3 corresponding to the auxiliary positioning devices 6 is arranged in place, the infrared emitter is vertically aligned with the infrared receiver 62. The arrangement of a hydrogen module 3 with the aid of the auxiliary positioning devices 6 can enhance the arrangement efficiency of the hydrogen module 3.

It should be noted that, in the auxiliary positioning device 6 of this embodiment, the infrared emitter may be replaced with a laser and the infrared receiver 62 may be replaced with a laser detector.

### Embodiment 3

This embodiment is different from Embodiment 1 as follows: In this embodiment, a number of the unit loading zones is one more than a number of the hydrogen modules 3, the hydrogen module carrier vehicle 1 is provided with a hydrogen module 3 substitute, and the hydrogen module 3 substitute has an identical outer contour to each hydrogen module 3.

The plurality of unit loading zones on the hydrogen module carrier vehicle 1 are arranged in one-to-one correspondence with the plurality of quick-change fixturing mechanisms 4, and the number of the unit loading zones is one more than the number of the hydrogen modules 3. When a spent hydrogen module 3 of a hydrogen-powered truck 7 needs to be changed, the spent hydrogen module 3 can be directly hoisted by the hoisting apparatus 2 to a vacant unit loading zone, and then a replacement hydrogen module 3 is hoisted by the hoisting apparatus 2 onto the hydrogen-powered truck 7. During the above process, the hoisting apparatus 2 does not need to place the spent hydrogen module 3 outside the hydrogen-powered truck 7 and the hydrogen module carrier vehicle 1, and avoids an additional operation of hoisting the spent hydrogen module onto the hydrogen module carrier vehicle 1, which improves the overall working efficiency of the hydrogen supply system for the hydrogen-powered truck.

The above are preferred embodiments of the present application, but the scope of protection of the present application is not limited thereto. Therefore, all equivalent changes made in accordance with the structure, shape, and principle of the present application shall fall within the scope of protection of the present application.

## Claims

1. A hydrogen supply system for a hydrogen-powered truck, **characterized by** comprising: a hydrogen module carrier vehicle (1) and a hoisting apparatus (2), wherein the hydrogen module carrier vehicle (1) is configured to load hydrogen modules (3); the hoisting apparatus (2) comprises main slide rails (21), a gantry frame (22), a top frame (23), and a hoisting and locking device (24); two main slide rails (21) are provided and are parallel to each other; the gantry frame (22) is slidably arranged between the two main slide rails (21); a length direction of the main slide rails (21) is defined as a longitudinal direction; the gantry frame (22) is provided with a longitudinal drive mechanism (25), and the longitudinal drive mechanism (25) is configured to drive the gantry frame (22) to move along the longitudinal direction; the top frame (23) is slidably arranged on a top of the gantry frame (22); the top frame (23) is provided with a horizontal drive mechanism (26), and the horizontal drive mechanism (26) is configured to drive the top frame (23) to move along a horizontal direction; the hoisting and locking device (24) is arranged on the top frame (23); the hoisting and locking device (24) is configured to grasp and hoist the hydrogen modules (3); a region between the two main slide rails (21) serves as a hydrogen module replacement region; and when the hydrogen module carrier vehicle (1) and the hydrogen-powered truck (7) are parked in the hydrogen module replacement region, front ends of both the hydrogen module carrier vehicle (1) and the hydrogen-powered truck (7) are oriented in the longitudinal direction.

2. The hydrogen supply system for a hydrogen-powered truck according to claim 1, **characterized in that** the main slide rails (21) each comprise a longitudinal steel rail (211) and a support truss (212); the support truss (212) comprises a steel beam (2120) and a plurality of support legs (2121); the steel beam (2120) is arranged along the longitudinal direction; the longitudinal steel rail (211) is longitudinally fixed to a top of the steel beam (2120); the plurality of support legs (2121) are spaced along the longitudinal direction; the plurality of support legs (2121) each comprise a vertical support rod (2122) and an inclined support rod (2123); the vertical support rod (2122) is arranged directly below the steel beam (2120); an upper end of the inclined support rod (2123) is connected to an upper end of the vertical support rod (2122); and a lower end of the inclined support rod (2123) is horizontally offset from the vertical support rod (2122).

3. The hydrogen supply system for a hydrogen-powered truck according to claim 2, **characterized in that** two ends of the steel beam (2120) are each provided with a limit block (2125), and the limit block (2125) is configured to limit a longitudinal travel of the gantry frame (22); a distribution range of the plurality of support legs (2121) along the longitudinal direction is located between two end faces of the steel beam (2120); a vertical support rod (2122) of a support leg (2121) that is close to an end of the steel beam (2120) is provided with a diagonal brace (2126); and an end of the diagonal brace (2126) is connected to the vertical support rod (2122), and another end of the diagonal brace (2126) is connected to the end of the steel beam (2120).

4. The hydrogen supply system for a hydrogen-powered truck according to claim 1, **characterized in that** a body of the hydrogen module carrier vehicle (1) is provided with a plurality of quick-change fixturing mechanisms (4); the plurality of quick-change fixturing mechanisms (4) are configured to position a replacement hydrogen module (3) or a spent hydrogen module (3); and the plurality of quick-change fixturing mechanisms (4) are equally spaced along a length direction of the body of the hydrogen module carrier vehicle (1).

5. The hydrogen supply system for a hydrogen-powered truck according to claim 4, **characterized in that** a loading region of the body of the hydrogen module carrier vehicle (1) is divided into a plurality of unit loading zones, and each of the plurality of unit loading zones corresponds to one of the plurality of quick-change fixturing mechanisms (4); a number of the unit loading zones is one more than a number of the hydrogen modules (3); the hydrogen module carrier vehicle (1) is provided with a hydrogen module (3) substitute; and the hydrogen module (3) substitute has an identical outer contour to each hydrogen module (3).

6. The hydrogen supply system for a hydrogen-powered truck according to claim 1, **characterized in that** a long side of the hydrogen module carrier vehicle (1) is provided with a hydrogen module (3) placement platform; the hydrogen module (3) placement platform comprises a platform plate (51), a limit plate (52), a limit bolt (53), and a hinge base (54); the platform plate (51) is hinged to the body of the hydrogen module carrier vehicle (1); the hinge base (54) is hinged to the body of the hydrogen module carrier vehicle (1); the hinge base (54) is lower than a side of the limit plate (52) that is connected to the hydrogen module carrier vehicle (1); the limit plate (52) is provided with a first through hole (511); the platform plate (51) is provided with a second through hole (521); the hinge base (54) is provided with a threaded hole (541) adapted to the limit bolt (53); the limit bolt (53) passes through the first through hole (511) and the second through hole (521) successively and is then threadedly connected to the threaded hole (541); the platform plate (51) is configured to support a hydrogen module (3); and the limit plate (52) is configured to prevent the hydrogen module (3) from leaving the platform plate (51).

7. The hydrogen supply system for a hydrogen-powered truck according to claim 1, **characterized by** further comprising auxiliary positioning devices (6), wherein the auxiliary positioning devices (6) each comprise an infrared emitter (61) and an infrared receiver (62); the infrared emitter (61) is configured to be arranged on a side wall of a hydrogen module (3); the infrared receiver (62) is configured to be arranged on a long side of a body of the hydrogen-powered truck (7) or the body of the hydrogen module carrier vehicle; and when the hydrogen module (3) corresponding to the auxiliary positioning devices (6) is arranged in place, the infrared emitter (61) is vertically aligned with the infrared receiver (62).

8. The hydrogen supply system for a hydrogen-powered truck according to claim 7, **characterized in that** a light-emitting side of the infrared emitter (61) has a point-like structure; a receiving side of the infrared receiver (62) has an elongated structure; a long edge of the receiving side of the infrared receiver (62) is parallel to a side wall of the corresponding hydrogen module (3); the auxiliary positioning devices (6) comprise a first auxiliary positioning device (6) and a second auxiliary positioning device (6); and the first auxiliary positioning device (6) and the second auxiliary positioning device (6) are respectively arranged on two adjacent sides of the corresponding hydrogen module (3).

9. The hydrogen supply system for a hydrogen-powered truck according to claim 7, **characterized in that** the infrared emitter (61) is provided with a first magnetic base (63); the infrared receiver (62) is provided with a second magnetic base (64); during assembly, the first magnetic base (63) is attached to a side wall of the corresponding hydrogen module (3) through magnetic attraction; and during assembly, the second magnetic base (64) is attached to the body of the hydrogen-powered truck (7) or the body of the hydrogen module carrier vehicle (1) through magnetic attraction.

10. The hydrogen supply system for a hydrogen-powered truck according to claim 1, **characterized in that** the hoisting and locking device (24) comprises a hoisting frame (241) and a lifting drive mechanism (243); the lifting drive mechanism (243) is arranged on the top frame (23); the hoisting frame (241) is arranged below the top frame (23) through the lifting drive mechanism (243); the hoisting frame (241) is provided with a plurality of positioning and locking mechanisms (246); the plurality of positioning and locking mechanisms (246) each comprise a clamping claw (2461) and a telescopic drive member (2462); the clamping claw (2461) is arranged on the hoisting frame (241) through the telescopic drive member (2462); and the clamping claw (2461) is configured to hook a hoisting structure of each hydrogen module (3).
